# EUROPEAN PATENT APPLICATION

(11) **EP 1 439 724 A1**
(43) Date of publication of application: **21.07.2004**
(21) Application number: 01961332.2
(22) Date of filing: 03.09.2001
(51) Int. Cl.: H04Q 7/38, H04L 12/46

(54) **MOBILE COMMUNICATION SYSTEM**

(71) Applicant: Fujitsu Limited, Kawasaki-shi, Kanagawa 211-8588 (JP)
(72) Inventor: HIGUCHI, Mamoru, c/o Fujitsu Limited, Kawasaki-shi, Kanagawa 211-8588 (JP); HAYASHI, Ritsuo, c/o Fujitsu Limited, Kawasaki-shi, Kanagawa 211-8588 (JP)
(74) Representative: HOFFMANN - EITLE
(86) International application number: PCT/JP2001/007627
(87) International publication number: WO 2003/021998

(57) **Abstract**

In a mobile communication system, an IP address of a mobile station MS is managed only in a node (for example, a radio network controller RNC), which is located on the end side of an access network. A user data addressed to the mobile station MS is broadcasted, on the assumption that the network has a sufficient transmission capacity. The mobile communication system performs user data communication in the form of packets, among a plurality of networks including a mobile network accommodating at least the mobile station. The mobile network is hierarchically structured, having a boundary node located on the boundary to a different network at the top of the hierarchy, and a plurality of nodes connected in a tree shape down to the mobile station s. Management information of the mobile station s is retained in the end-side node among the plurality of nodes.

## Description

### FIELD OF THE INVENTION

The present invention relates to a mobile communication system, and more particularly a mobile communication systemwhich transmits and receives user data packets end-to-end in a mobile communication network supporting the Internet Protocol (IP).

### BACKGROUND OF THE INVENTION

Among current communication networks, a remarkable development has been achieved in a mobile communication network. Even a plan of constituting a new communication network (hereafter referred to as an integrated communication network) has been conceived based on a concept of integrating the existing fixed network and the mobile communication network by regarding a fixed communication terminal as a 'mobile station (MS) having zero mobility (not in movement)'.

It is also considered that a variety of services including data transfer and voice communication may be provided by a single network by introducing an IP infrastructure (affording IP addresses and supporting IP transport function) to the entire terminals for use and nodes included in the integrated communication network.

Now, in order to notify an existence of a mobile station MS to the network side, the mobile station MS first secures radio resources. Thereafter, the mobile station MS transmits an identification number (Initial UE Identity) uniquely assigned to each terminal, which is different from an IP address, via an access network radio base station located nearest to the terminal concerned, by packing the identification number in a particular signal.

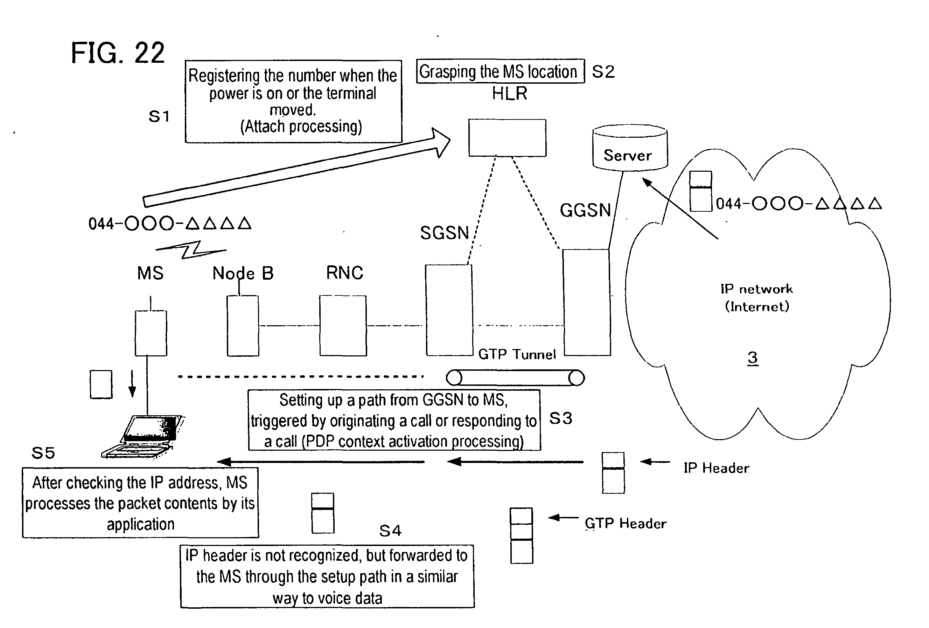

FIG. 22 shows a packet communication system in an existing mobile communication system.

In the system shown in FIG. 22, the above-mentioned particular signal is a signal referred to as an Attach Request signal, which is transmitted from the mobile station MS to an SGSN (Serving GPRS Support Node). Here, the SGSN is an apparatus provided in a Core network (the network provided on the center side) for supporting packet communication with a RAN (Radio Access Network: the network provided on the terminal side and accessed by the terminal during communication). Or, the above-mentioned particular signal is a signal referred to as a Location Area Update Request signal, which is transmitted to the SGSN from the terminal having moved and changed the location, thereby requesting the SGSN to register this new location (step S1).

Subsequently, with regard to the aforementioned identification number particularly assigned to the mobile station MS, the location information is registered, correspondingly to the mobile station number, into a node dedicatedly provided for managing the mobile station s in the network. (By way of example, the dedicated node is a register provided for the mobile station location registration, such as an HLR: Home Location Register, a VLR: Visiting Location Register, or the like.) (step S2)

Next, triggered by a signal (referred to as an Active PDP Context signal) which is transmitted from the terminal to the SGSN to start packet communication, a GTP tunnel is set up for the packets between the SGSN and the apparatus (referred to as a GGSN: Gateway GPRS Support Node) disposed on the boundary of the mobile communication network against an external network such as the Internet. (Here, the GTP tunnel is a dedicated virtual path set up between the SGSN and the GGSN for transmitting packets for certain communication.) (step S3)

The 'tunnel' described above refers to a transfer section in which tunneling is carried out. The 'tunneling' is a technique by which a user data is transferred after a data encapsulation (with a unique number given to the communication concerned), instead of the user data being transferred on the core network side using the IP address information contained in the user data (packet). Accordingly, even when the mobile station moves, keeping its own IP address, the opposite party can continue the ongoing communication with the mobile station using the usual IP address, by use of a tunnel modified in the network. It is not necessary for the opposite party to be conscious of the movement of the mobile station.

To enable the above-mentioned technique in a GPRS (General Packet Radio Service) system, the GTP (GPRS Tunneling Protocol) is employed. In the GTP, a transfer through the tunnel is performed in the form of a GTP header attached to each IP packet (i.e. with an encapsulated format).

After the GTP tunnel is set up, the packet data is conveyed through this tunnel to the mobile station MS (step S4). At this time, the packet IP header is not recognized, but transmitted to the mobile station MS through the path having :been set up, similarly to a voice data.

The mobile station MS checks the received packet IP header, and an application program in the mobile station MS deals with the packet contents (step S5).

Here, when the mobile station MS moves, keeping the fixed IP address, a technique is employed in some systems (which is referred to as the Mobile IP). That is, a packet is transmitted to the location the mobile station MS has moved in, by the use of the packet encapsulation technique in an HA (Home Agent) and an FA (Foreign Agent). In such a system, when the mobile station MS moves during communication, there has been performed a processing corresponding to the GTP tunnel reestablishment so as to maintain the ongoing communication.

Namely, the routing control dedicated to a specific mobile station MS has been carried out in the network. And, the location registration information management is performed in particular nodes (for example, the HLR/the VLR) of the network. Therefore, each time the mobile station MS moves, causing an appropriate transition of radio network controllers RNCs or the like, which are the access nodes of the mobile station MS, information on this occurrence of switchover is produced in the network, so that the occurrence is notified to the above-mentioned particular access nodes.

Although it is possible for the RAN side to use a common channel as transmission path for transferring the user data between the mobile station MS and the access node, in the actual situation, use of an individual channel is inevitable in case that a large amount of data transfer is required between the terminals. When such an individual channel is used as transmission path for transferring the user data, additional signal processing is necessary between the related nodes, compared with the case of using the common channel.

Further, because the tunnel reestablishment processing is initiated by the movement of the mobile station MS as a trigger, for the data transmission to a mobile station MS which moves fast and frequently, a fast reestablishment processing is required so as to meet the condition.

Under such circumstances, there has been a problem on the core network side (the network located on the center side) that large loads are produced in the network, because signal traffic for location information registration has to be interchanged in the network whenever the location registration operation is performed resulting from the movement of the mobile station MS.

Meanwhile, as a problem on the RAN side is that, because individual channels are used for the user traffic transfer in many cases, it is difficult to secure efficient resources in such an environment that a plurality of mobile station s MSs haveburst traffic characteristics. Moreover, because the processing for securing a transmission path for an individual user data transfer is performed before the user data transfer starts, the processing for coping with this is necessary. As a result, a delay prior to the user data transfer is produced.

Further, as a common problem to both the core network side and the RAN side, it is not possible to perform data transmission/reception at the location the mobile station MS moved in until the location change information caused by the movement of the mobile station MS is transmitted to the entire nodes in the network which perform the routing control.

### SUMMARY OF THE INVENTION

Accordingly, it is an object of the present invention to provide a mobile communication system solving the aforementioned problems on the core network side, the RAN side, and common to the core network side and the RAN side.

As a conceptual feature of the mobile communication system according to the present invention to achieve the aforementioned object, the IP address of a mobile station MS is managed only in the end-side nodes of an access network (for example, a radio network controller RNC provided in a radio base station, where the radio base station is a node) and user data addressed to the mobile station MS is broadcasted in a core network, on the assumption that the core network side has a sufficient transmission capacity.

Further, as a first aspect of the configuration of: the mobile communication system in the aforementioned invention concept according to the present invention, in a mobile communication system performing both radio communication to a mobile station and packet communication within the system, there are included a plurality of nodes of a tree-shaped connection structure, having a boundary node to a different network positioned at the top. In the mobile communication system, management information of the mobile station is retained in an end-side node among the plurality of nodes.

As a second aspect of the mobile communication system configuration according to the concept of the present invention, in the aforementioned first aspect of the mobile communication system, each plurality of nodes transfers a user data either received from a node located in the network concerned, or received from the different network and addressed to the network of interest, by use of the broadcast format to the end-side nodes, in which the user data is further transmitted to a mobile station subordinate to and managed by the end-side node, based on the management information.

As a third aspect of the mobile communication system configuration according to the concept of the present invention, in the aforementioned first aspect, a parameter requesting to use a common traffic channel is contained in a connection request signal transmitted from the mobile station to the end-side node, and by use of the parameter, the end-side node secures a transmission path for transferring the user data on the common channel provided between the mobile station and the end-side node.

As a fourth aspect of the mobile communication system configuration according to the concept of the present invention, in the aforementioned third aspect, an IP address assigned to the mobile station is further contained in the connection request signal, and the end-side node generates a management table having the IP address correspondingly to a number for identifying the mobile station, and the mobile station is managed on an IP address basis according to the management table.

As a fifth aspect of the mobile communication system configuration according to the concept of the present invention, in the aforementioned first aspect, the end-side includes at least a function of managing the terminal location, a function of managing a communication path, and environment setting information necessary for establishing packet communication between the mobile station and the end-side node. A message transmitted from the mobile station for generating the environment setting information is terminated in the end-side node.

As a sixth aspect of the mobile communication system configuration according to the concept of the present invention, in the aforementioned first aspect, the end-side node is either a radio base station or a radio network. controller.

Further, as processing procedures in the mobile communication system according to the concept of the present invention, in the aforementioned first aspect, the processing procedures include: a first processing procedure registering the location of the mobile station into the end-side node by setting up a signal transmission path between the end-side node and the mobile station; a second processing procedure setting a mobile communication environment; and a third processing procedure setting up a user data transmission path.

Further, as still another aspect of the mobile communication system according to the concept of the present invention, in a mobile communication system in which information either addressed to or originated from a mobile station is transmitted on a packet communication basis between hierarchically disposed nodes, a node disposed on the superordinate side in the hierarchy has a means for transmitting a packet in the broadcast format to the nodes disposed on the subordinate side; and a node disposed on the subordinate side in the hierarchy has a means for transmitting a packet to a predetermined node superordinate to the node of interest, according to the information received from the mobile station.

Still further, according to the concept of the present invention, in a node included in a mobile communication system transmitting information either addressed to or originated from a mobile station on a packet communication basis between hierarchically disposed nodes, the node includes: a transmission means for transmitting a packet in the broadcast format to the nodes disposed on the subordinate side in the hierarchy; and a reception means for receiving a packet transmitted from a predetermined subordinate node.

Further, according to the concept of the present invention, in the aforementioned aspect of the node included in the mobile communication system transmitting information either addressed to or originated from a mobile station on a packet communication basis between hierarchically disposed nodes, the transmission means broadcasts a packet not addressed to a different system. Also, when a received packet is addressed to the different system, the reception means transmits the packet to the different system or the corresponding further superordinate node in the hierarchy.

Further, according to the concept of the present invention, in a node included in a mobile communication system transmitting information either addressed to or originated from a mobile station on a packet communication basis between hierarchically disposed nodes, the node includes: a means for transmitting a packet to a predetermined superordinate node according to the information received from the mobile station; a means for managing the location information of the mobile station; and a transmission means for transmitting a received packet having been transmitted in the broadcast format from the superordinate node in the hierarchy, to either a mobile station or a subordinate node further, when the packet is addressed to the mobile station of which location information is managed by the location information management means.

Further scopes and features of the present invention will become more apparent by the following description of the embodiments with the accompanied drawings.

### BRIEF DESCRIPTION OF THE DRAWINGS

FIG. 1 shows an exemplary network configuration according to an embodiment of the present invention.
FIG. 2 shows a functional block diagram of a radio network controller RNC.
FIG. 3 shows an exemplary function block of an SGSN.
FIG. 4 shows an exemplary function block of a GGSN.
FIG. 5 shows a sequence diagram illustrating a general procedure for securing resources between a mobile station MS and a radio network controller RNC.
FIG. 6 shows a diagram illustrating a signal transmission path setup and an RRC Connection Request in location registration processing.
FIG. 7 shows a diagram illustrating a table generated in a radio network controller RNC for managing a mobile station MS.
FIG. 8 shows a diagram illustrating a signal path of an RRC Connection Setup signal transmitted in response to an RRC Connection Request signal.
FIG. 9 shows a diagram illustrating a signal path for notifying an RRC Connection Setup Complete signal.
FIG. 10 shows a diagram illustrating a process for adding a P-TMSI (Packet Temporary Mobile Subscriber ID), performed by a radio network controller RNC for managing a mobile station MS.
FIG. 11 shows a diagram illustrating processing procedure P2 shown in FIG. 5.
FIG. 12 shows a diagram illustrating the initiation timing of a Radio Bearer Setup signal and a signal path therefor.
FIG. 13 shows a diagram illustrating a signal path of a Radio Bearer Setup Complete signal transmitted as a response against a Radio Bearer Setup signal.
FIG. 14 shows a diagram collectively illustrating processing performed in respective nodes with regard to a transfer of a user data transmitted from a mobile station MS.
FIG. 15 shows a diagram illustrating an uplink user data transfer performed by a radio network controller RNC and an SGSN.
FIG. 16 shows a diagram illustrating user data transfer processing in a GGSN on receipt of an uplink user data.
FIG. 17 shows a diagram illustrating user data transfer processing on receipt of a user data from a different network.
FIG. 18 shows a downlink user data transfer performed in a network.
FIG. 19 shows a diagram illustrating paging of a mobile station MS from a radio network controller RNC.
FIG. 20 shows an end-to-end user data transfer in accordance with the present invention.
FIG. 21 shows a diagram illustrating a copy function performed in each network node.
FIG. 22 shows a diagram illustrating a packet communication system in the existing mobile communication system.

### DETAILED DESCRIPTION OF THE PREFERRED EMBODIMENTS

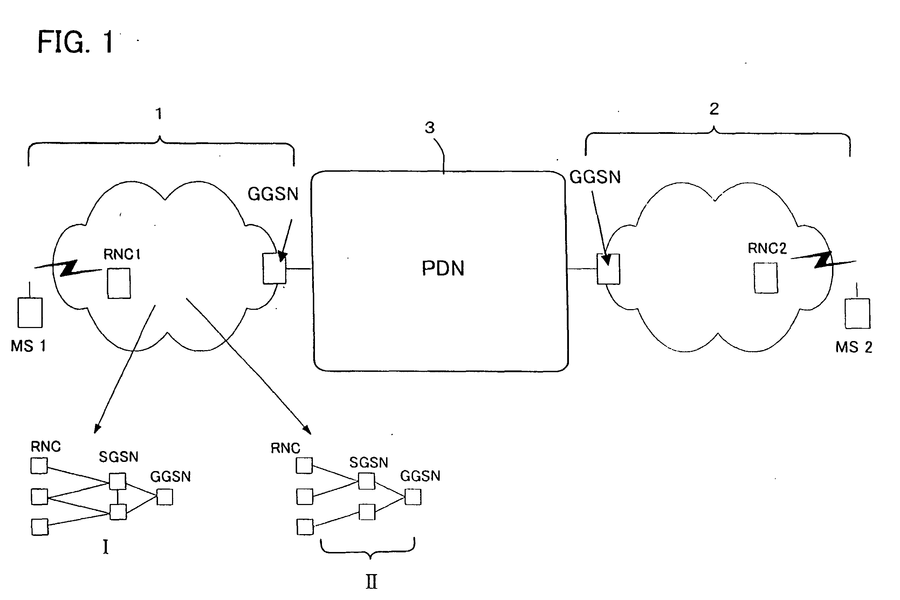

FIG. 1 shows an exemplary network configuration according to an embodiment of the present invention. In the explanation of the embodiments described below, on the assumption of a mobile station MS being a mobile station, each terminal is represented as mobile station MS . However, the mobile station MS may be a fixed terminal in an application of the present invention.

In this embodiment, the following describes a procedure in which a mobile station MS1, which is subordinate to a radio network controller RNC1 in a mobile network 1 constituted of an IP network, transmits a user data to a mobile station MS2, which is subordinate to a radio network controller RNC2 in a different mobile network 2 also constituted of an IP network.

Each mobile network 1, 2 depicted as an object of the present invention is represented by a network structured of a plurality of hierarchical nodes, by which user data are transferred within an area from the mobile station MS to a boundary node (GGSN) against a different network (a fixed communication network 3, shown as an example in FIG. 1) or the like.

Further, as a connection, scheme between the hierarchical nodes constituting the mobile network, such a structure as having a plurality of transfer routes from any one node to another (refer to I in FIG. 1) is excluded from consideration in the embodiments of the present invention. Namely, an exemplary connection scheme between nodes is formed of a hierarchical tree structure shown as II in FIG. 1. Also, as an embodiment of the present invention, the mobile network is assumed to be a network using a Gigabit Ethernet.

In addition, the mobile station MS is provided with a function of accepting the signaling sequence described later (i.e. a processing function of an IP packet to be transferred in the mobile network).

Also, in the embodiment shown in FIG. 1, existing signals and a variety of channels are used, and the specifications of TS25.301 (Radio Interface Protocol Architecture) and TS25.331 (RRC Protocol Specification) specified by the 3GPP (3rd Generation Partnership Project) are employed, unless specified as 'new' in the following description. Further, the embodiment is based on a premise that each mobile station has a fixed IP address (irrespective of a mobile station location).

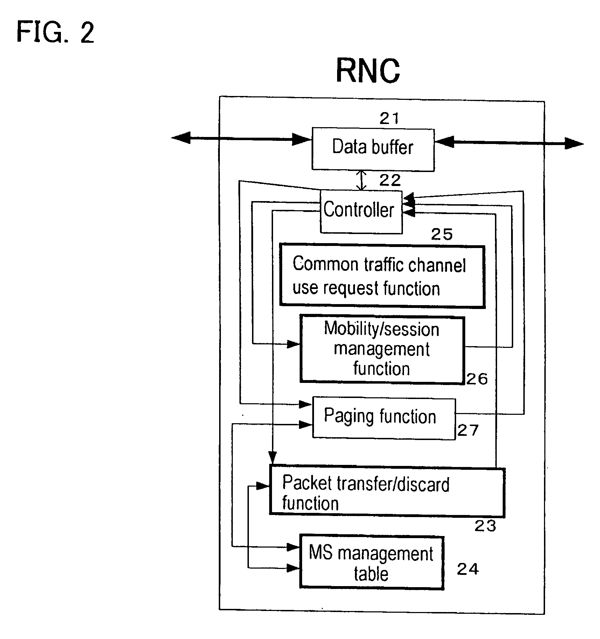

FIGS. 2 - 4 show function block diagrams of the radio network controller RNC, the SGSN and the GGSN shown in FIG. 1. The function sections shown by the bold lines, to which the present invention is applied, are newly added to the corresponding apparatuses of the existing system shown in FIG. 22.

In the functional block diagram of the radio network controller RNC shown in FIG. 2, a data buffer 21 is provided, and a controller 22 controls to store a user data packet into data buffer 21, and read out the packet into a different function section.

A function section 23 controls to transfer/discard the packet read out into controller 22. Further, as a feature of the present invention, it is modified from the existing system such that the information related to the mobile station MS, which is registered in the HLR in the existing system shown in FIG. 22, is registered in an MS management table 24.

The functions of the above-mentioned function section 23 and MS management table 24 are explained in the following processing procedure description, together with other functions shown in FIG. 2, i.e. a CTCH (common traffic channel) use request function section 25, a mobility/session management function section 26, and a paging function section 27.

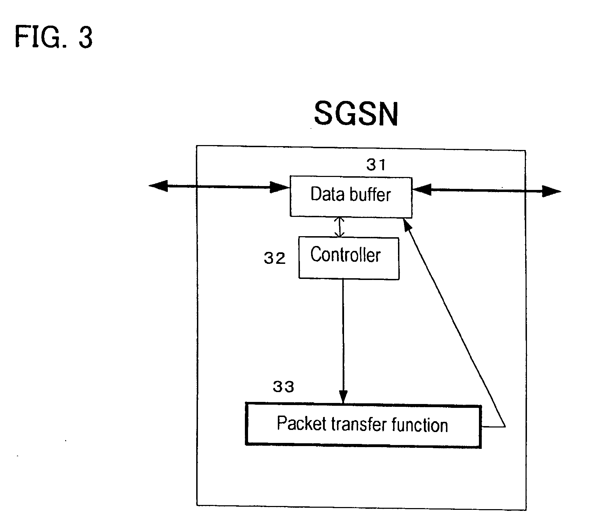

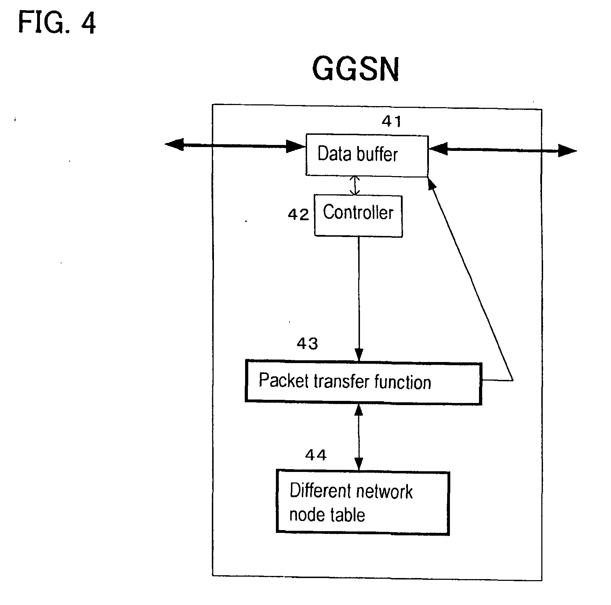

FIG. 3 shows a diagram illustrating an exemplary function block of the SGSN. Also, FIG. 4 shows an exemplary function block of the GGSN. In the SGSN and the GGSN, there are provided data buffers 31, 41, controllers 32, 42, similarly to the case of the radio network controller RNC. As a feature of the present invention, a packet transfer function section 33 is added in the SGSN shown in FIG. 3. Also, a packet transfer function section 43 and a different network node table 44 are added in the GGSN.

Although these function sections may desirably be configured of programs, these function sections may be configured of dedicated hardware function sections. These function sections will also be explained properly in the related parts of the processing procedure description.

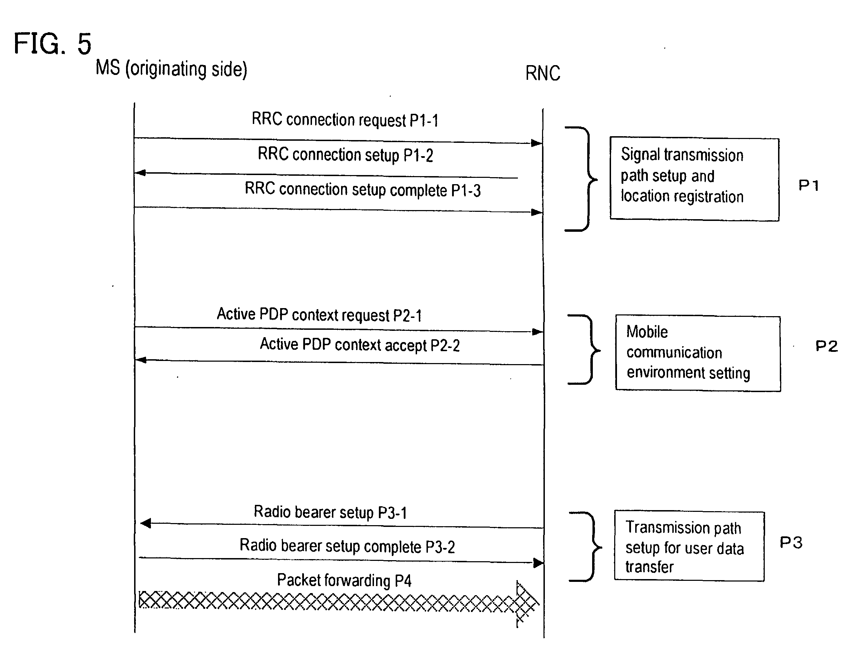

FIG. 5 shows a sequence diagram illustrating a general procedure for securing resources between the mobile station MS and the radio network controller RNC.

As a broad flow of sequence, the procedure includes: a location registration processing for setting up a signal transmission path (processing procedure P1); a mobile communication environment setting (processing procedure P2); and a user data transmission path setup (processing procedure P3).

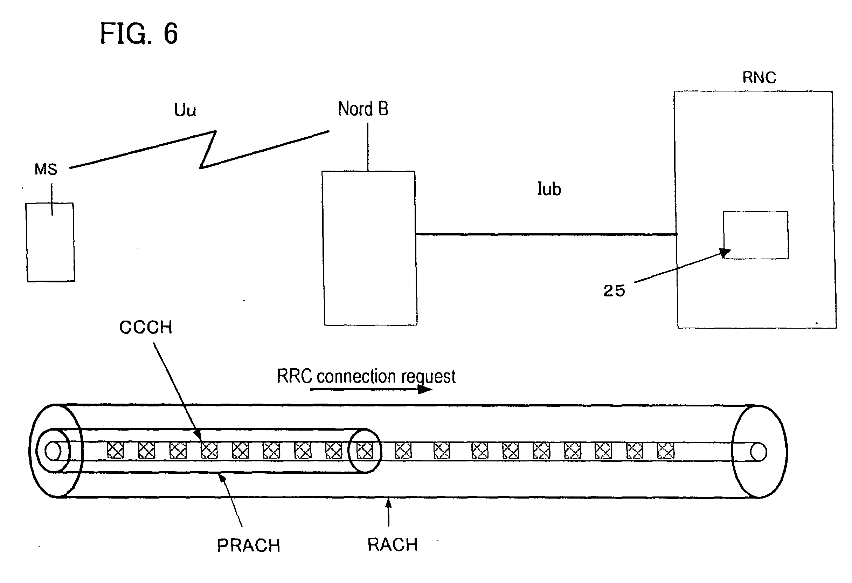

The processing sequence shown in FIG. 5 will be. described hereafter in detail, referring to FIGS. 6 - 13.

FIG. 6 shows a diagram illustrating a signal transmission path setup and an RRC Connection Request (processing procedure P1-1) in the location registration processing (processing procedure P1). The figure depicts an RRC Connection Request signal path and a new parameter transmitted on this signal path.

It is assumed that the power of a certain mobile station MS is turned on. Here, in order to secure radio resources for signals between the mobile station MS and the radio network controller RNC, the mobile station MS uses an RRC Connection Request signal addressed to the radio network controller RNC via a node B.

Namely, the mobile station MS transmits the RRC Connection Request signal in the format of a Common Control Channel (CCCH), which is a logical channel, by use of a Random Access Channel (RACH), which is a common uplink transport channel having been set up when starting up the radio network controller RNC.

As for a physical channel between the mobile station MS and the node B, a physical channel PRACH (Physical Random Access Channel) is used, as in the conventional method. Here, the transfer capacity of this physical channel PRACH is fixedly predetermined from the frequency and the spread code in the system.

According to the present invention, a new parameter specifying 'use of the common traffic channel' is added in the RRC Connection Request signal. Corresponding to this, the radio network controller RNC recognizes the above-mentioned parameter indicating 'use of the common traffic channel' in CTCH (common traffic channel) use request function section 25.

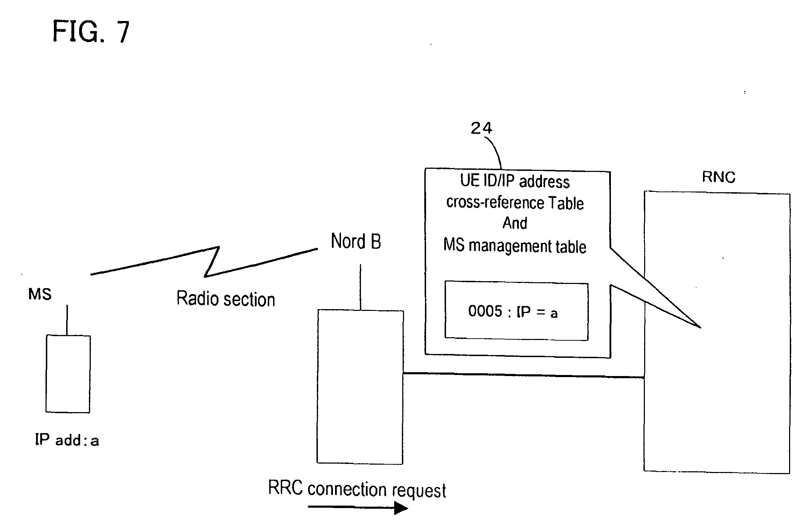

FIG. 7 shows a diagram illustrating an MS management table 24 for managing the mobile station MS, which is generated in the radio network controller RNC. According to the present invention, information 'IP address of the mobile station MS' is newly added to the RRC Connection Request signal, and transmitted as an identifier proper to the mobile station MS, in addition to the conventional 'Initial UE Identity' (represented as 'UE ID' in FIG. 7).

Accordingly, in the radio network controller RNC, a cross-reference table of the IP address with the Initial UE Identity, and management table 24 for the mobile station MS (or, simply referred to as 'MS management table') are generated and registered for the mobile station MS from which the added information, etc. are received. For example, by registering data, 0005 : IP = 'a', it is denoted that the Initial UE Identity of the registered mobile station MS is 0005, and the IP address thereof is 'a'. Preferably, corresponding to these data, the identification information of the node B having accepted the RRC Connection Request signal is stored in the MS management table.

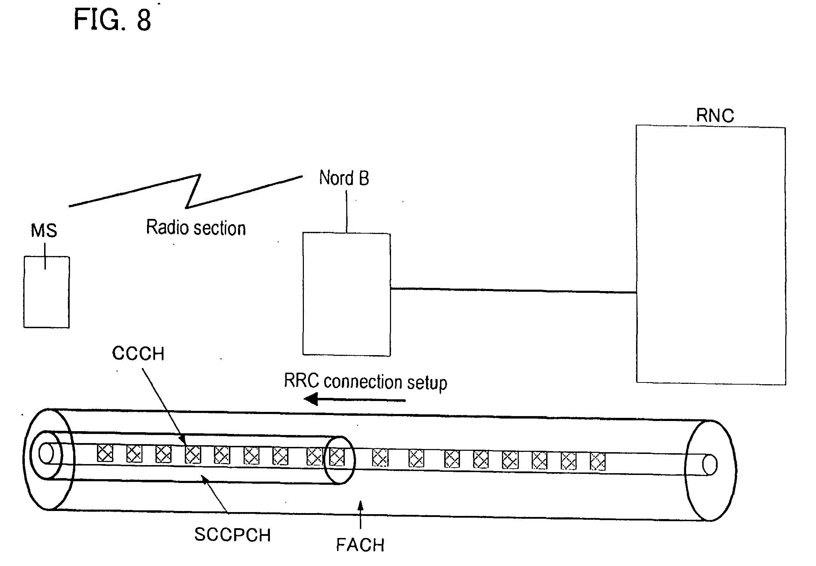

FIG. 8 illustrates a signal path of an RRC Connection Setup signal, which is transmitted in response to the RRC Connection Request signal in the processing procedure P1-2 shown in FIG. 5.

As in the conventional method, the radio network controller RNC transmits the RRC Connection Setup signal to the mobile station MS via the node B, by use of a Forward Access Channel (FACH), which is a downlink common transport channel having been set up in advance.

As a physical channel between the mobile station MS and the node B, a downlink common physical channel referred to-as a Secondary Common Control Physical Channel (SCCPCH) is used in the same way as in the conventional method.

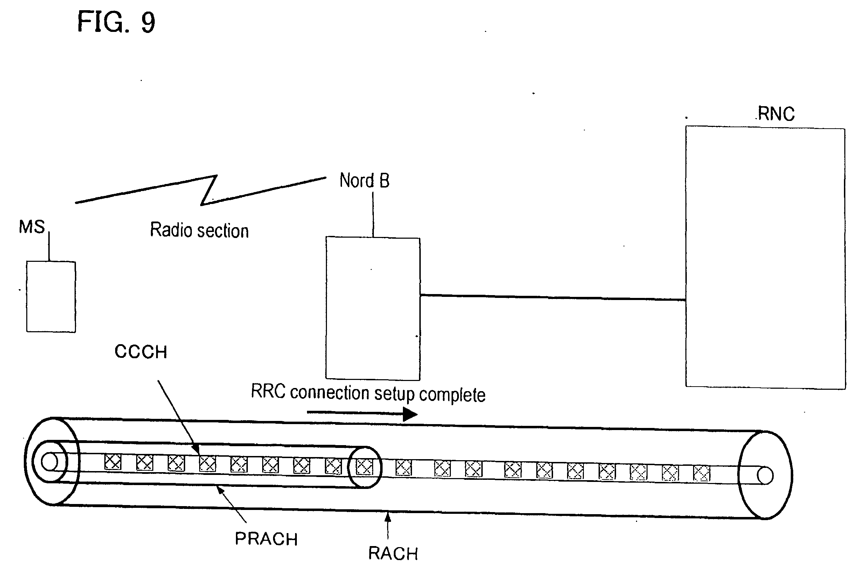

FIG. 9 illustrates a signal path for notifying an RRC Connection Setup Complete signal, shown as the processing procedure P1-3 in FIG. 5. 'Use of the common traffic channel' is applied for the signal transmission between the mobile station MS and the radio network controller RNC.

Because of this, on receipt of the RRC Connection Setup signal from the radio network controller RNC, the mobile station MS transmits an RRC Connection Setup Complete signal back to the radio network controller RNC via the node B, by use of the Common Control Channel (CCCH).

With this, the signal path (RRC Connection) between the mobile station MS and the radio network controller RNC is set up, thus enabling signal communication through the Common Control Channel (CCCH) for setting up a transmission path for user data transfer. In other words, the signal transmission path between the mobile station MS and the radio network controller RNC is set up.

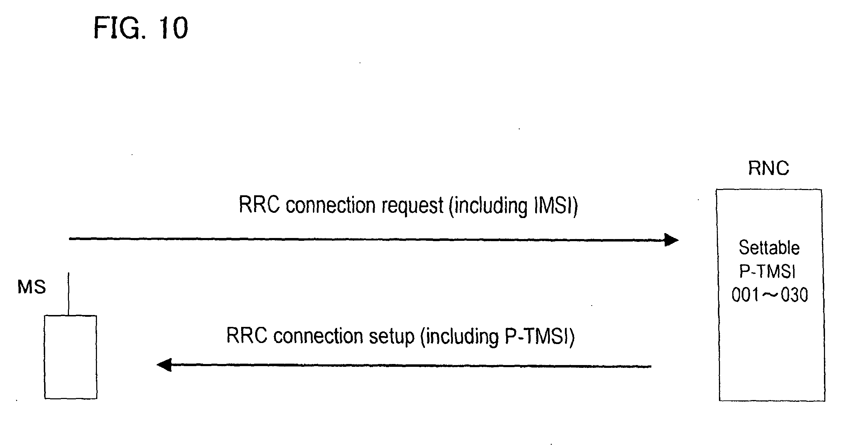

FIG. 10 illustrates a process for adding a P-TMSI (Packet Temporary Mobile Subscriber ID) performed by the radio network controller RNC for managing the mobile station MS, which aims to perform the location registration processing shown as the processing procedure P1 in FIG. 5. The P-TMSI is an identification number which the node on the network side managing a mobile station MS temporarily assigns to the mobile station MS having requested the location registration, aiming to manage the terminal in the packet communication system.

In FIG. 10, an IMSI (International Mobile Subscriber ID) is included, as an Initial UE Identity, in the RRC Connection Request transmitted from the mobile station MS to the radio network controller RNC. This IMSI is an identification number proper to each subscriber, assigned peculiar to each mobile station MS.

When the radio network controller RNC receives the above-mentioned IMSI, a mobility management (MM) function of the mobile station provided in mobility/session management function section 26 of the radio network controller RNC assigns the P-TMSI to the mobile station MS to identify the mobile station MS of interest temporarily.

Here, because each radio network controller RNC independently assigns P-TMSIs to the mobile station s MSs subordinate to the radio network controller RNC concerned, the assigned numbers may possibly be overlapped. To avoid such an overlap, a number range which can be assigned in each radio network controller RNC is limited on an RNC-by-RNC basis.

For example, the radio network controller RNC shown in FIG. 10 can assign the P-TMSIs ranging from 001 to 030. Among these, a P-TMSI = 001 is assigned to the illustrated mobile station MS having issued an RRC Connection Request.

The above-mentioned processing is performed at the time of location registration when turning on the power, etc. When the mobile station MS performs a call originating (start of communication) operation, the following processing procedure P2 is performed after the processing procedure P1.

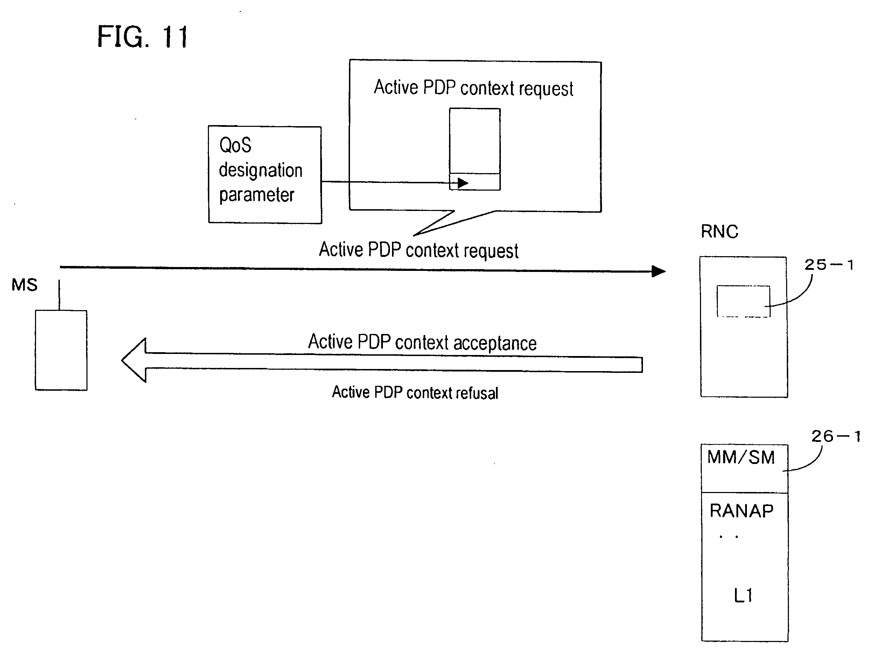

FIG. 11 shows a diagram illustrating the processing procedure P2 shown in FIG. 5. From the mobile station of which location registration has been completed in the processing procedure P1, an Active PDP Context Request is transmitted to the radio network controller RNC (processing procedure P2-1).

This Active PDP Context Request is a signal transmitted from the mobile station MS to the SGSN, aiming to set a communication environment for packet communication to be performed via the radio network controller RNC. This signal is specified in TS 23.060.

Here, in the conventional apparatuses, the mobile station MS transmits an Active PDP Context Request to the core network side, for example, an SGSN, via the radio network controller RNC. This request message is terminated at the SGSN, and thereafter, the processing for setting up a tunnel between the SGSN and the GGSN is performed in the SGSN and the GGSN to be used for a user data transmission/reception path for the mobile station MS.

In contrast, according to the present invention, in order that the location management function and the communication path management function for the mobile station MS are excluded from the core network side, an MM (mobility management)/SM (session management) protocol stack 26-1, in which the Active PDP Context Request is terminated, is mounted as a function section 26 in the radio network controller RNC.

Meanwhile, on the core network side, the user data transfer is performed using a method described later, which makes it unnecessary to set up a tunnel between the SGSN and the GGSN. For this reason, the radio network controller RNC does not transfer to the core network side a signal related to the termination of the Active PDP Context Request.

Further, in the conventional method, the radio network controller RNC recognizes a QoS (Quality of Service) parameter included in a request for securing a packet communication path between the SGSN and the radio network controller RNC (i.e. RAB Assignment Request) transmitted from the core network side, and determines individual/common channel assignment.

In contrast, according to the present invention, CTCH (common traffic channel) assignment function section 25-1 is provided at the CTCH use request function section 25 in the radio network controller RNC. A parameter specifying the QoS is included in the Active PDP Context Request terminated at MM/SM protocol stack 26-1. CTCH (common traffic channel) assignment function section 25-1 recognizes this parameter, to determine whether or not the QoS request can be satisfied.

When it is determined that the requested QoS can be satisfied, a common traffic channel is assigned for the mobile station MS having originated the Active PDP Context Request, and an Active PDP Context Accept signal is transmitted to the mobile station MS. When it is determined the requested QoS cannot be satisfied, an Active PDP Context Reject signal rejecting the common traffic channel assignment is transmitted (processing procedure P2-2).

Additionally, in the present invention, it is assumed that the core network side has a sufficient transmission capability. Under such assumption, any QoS may be guaranteed.

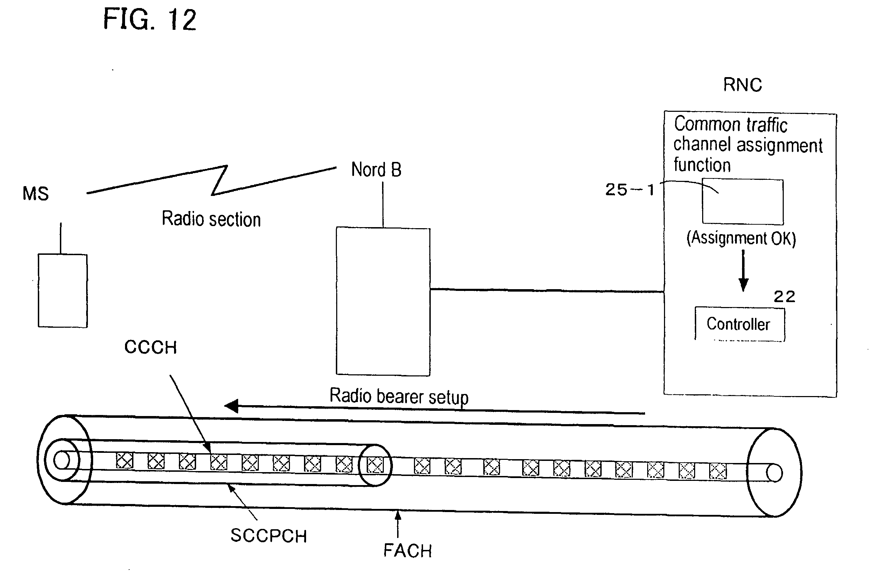

FIG. 12 illustrates the initiation timing of a Radio Bearer Setup signal and a signal path for this signal performed in the transmission path setup processing for user data transfer (processing procedure P3) shown in FIG. 5.

In the conventional apparatuses, a Radio Bearer Setup signal is transmitted to the mobile station MS, triggered by the reception of an RANAP message (RAB Assignment Request) , as a request for obtaining a packet communication path between the SGSN and the radio network controller RNC from the core network side.

In contrast, according to the present invention, when the radio network controller RNC receives the Active PDP Context Request from the mobile station MS, CTCH (common traffic channel) assignment function section 25-1 determines whether or not this request is acceptable, as described earlier referring to FIG. 11.

If this channel assignment is possible, controller 22 sets up a radio transmission path, and transmits a Radio Bearer Setup signal to the mobile station MS (processing procedure P3-1).

To transmit the Radio Bearer Setup signal, the same channel as used for the transmission of the RRC Connection Setup signal is used.

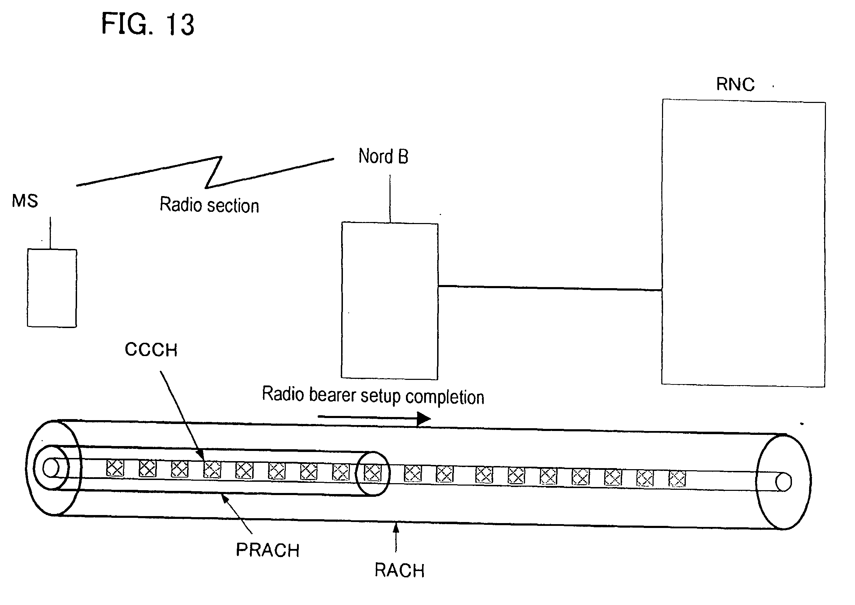

FIG. 13 illustrates a signal path of a Radio Bearer Setup Complete signal transmitted as a response against the aforementioned Radio Bearer Setup signal.

The mobile station MS secures a channel for user data transfer between the node B and the mobile station (securing PRACH/SCCPCH transfer capacity), and transmits a Radio Bearer Setup Complete signal to the radio network controller RNC via the node B (processing procedure P3-2).

With this, the transmission path for user data transfer between the mobile station MS and the radio network controller RNC is set up, enabling packet-forwarding from the mobile station MS (processing procedure P4). The user data is transmitted on an RACH in a DTCH (Dedicated Traffic Channel) format. By this transmission on the RACH, the DTCH is used as a common channel.

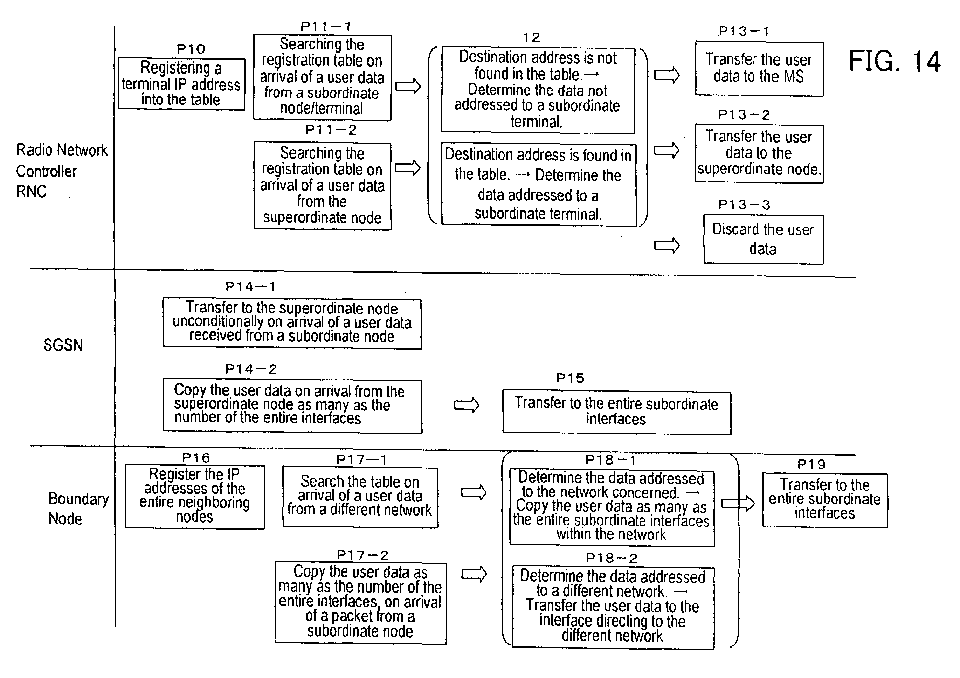

FIG. 14 shows a diagram collectively illustrating processing performed in the respective nodes (i.e. the radio network controller RNC, the SGSN, and the boundary node-GGSN) with regard to the transfer of a user data transmitted from the mobile station MS. Each detail of the processing will be described in the following.

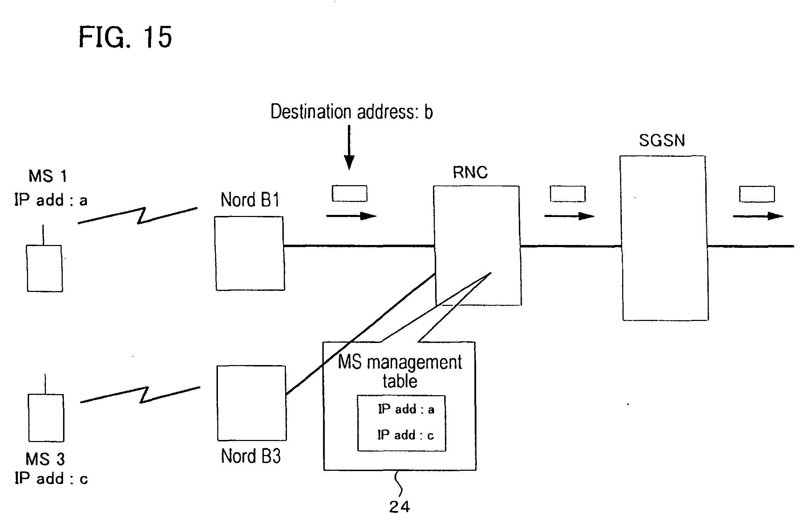

FIG. 15 is a diagram illustrating an uplink user data transfer, performed by the radio network controller RNC and the SGSN.

The radio network controller RNC has MS management table 24, in which an IP address of the mobile station MS the location of which has been registered (processing procedure P10). The radio network controller RNC searches the above-mentioned MS management table 24 managed by the radio network controller RNC of interest, to check whether the destination of the user data having been received from a certain mobile station MS is a mobile station MS subordinate to the radio network controller RNC of interest (processing procedure P11-1).

Through this search, it is determined whether the user data from the mobile station MS1 is addressed to another mobile station MS subordinate to the radio network controller RNC of interest (processing procedures P12-1, 12-2).

If the destination is the different mobile station MS subordinate to the radio network controller RNC, the user data is transferred to themobile station MS concerned (processing procedure P13-1). Otherwise, the user data is transferred to the SGSN, which is the superordinate node (processing procedure P13-2). According to the embodiment shown in FIG. 15, the radio network controller RNC receives the user data from the mobile station MS1. Because the destination IP address of the user data is b, which is not listed in the own MS management table 41, the radio network controller RNC determines that the destination MS is not located subordinate to the radio network controller RNC concerned. Accordingly, the radio network controller RNC transfers the user data to the SGSN.

Further, in FIG. 15, when the SGSN receives the user data from the radio network controller RNC, which corresponds to a subordinate node to the SGSN, the SGSN transfers the user data packet retained in a data buffer 31 to the superordinate GGSN (not shown in FIG. 15), by controlling packet transfer function section 33 from controller 32 (processing procedure P14-1).

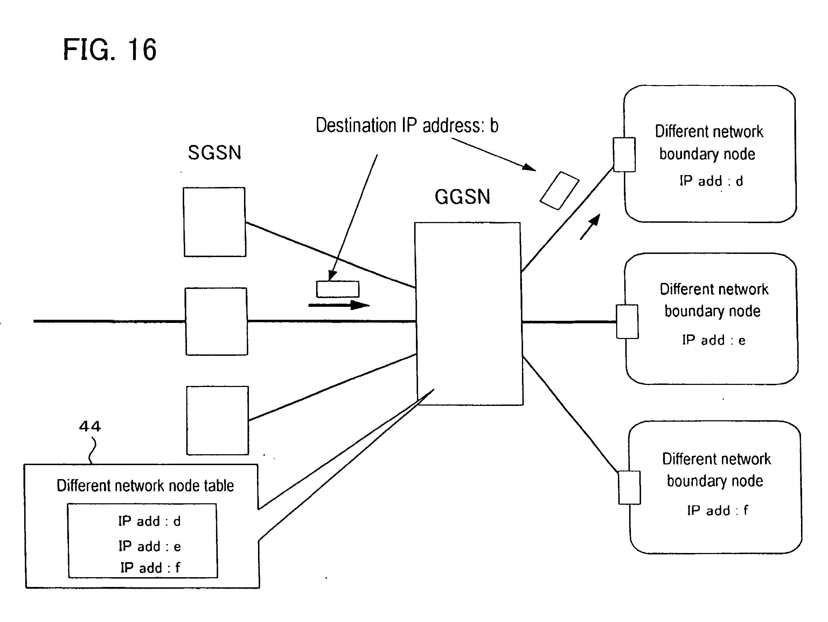

FIG. 16 illustrates user data transfer processing in the GGSN on receipt of an uplink user data. In the GGSN, which is a boundary node against a different network, the IP addresses of the entire neighboring nodes are registered in advance in the different network node table 44, so as to determine, on receipt of the user data from the subordinate node SGSN, whether the user data destination is located inside the network the GGSN belongs to, or in a different network (processing procedure P16).

As a result of the decision by use of the different network node table 44, if the user data destination is a different network, a unicast transfer to the destination network is performed in packet transfer function section 43 (processing procedure P18-2). Otherwise, if the destination is inside the network the GGSN belongs to, the user data is copied as many as the number of the entire interfaces by controller 42 (processing procedure P17-2), and a multicast transfer of the copied user data only to the entire interfaces connected to each node within the network is performed by packet transfer function section 43 (processing procedure P18-1). In the example shown in FIG. 16, there is shown a case of transfer when the destination is in a different network.

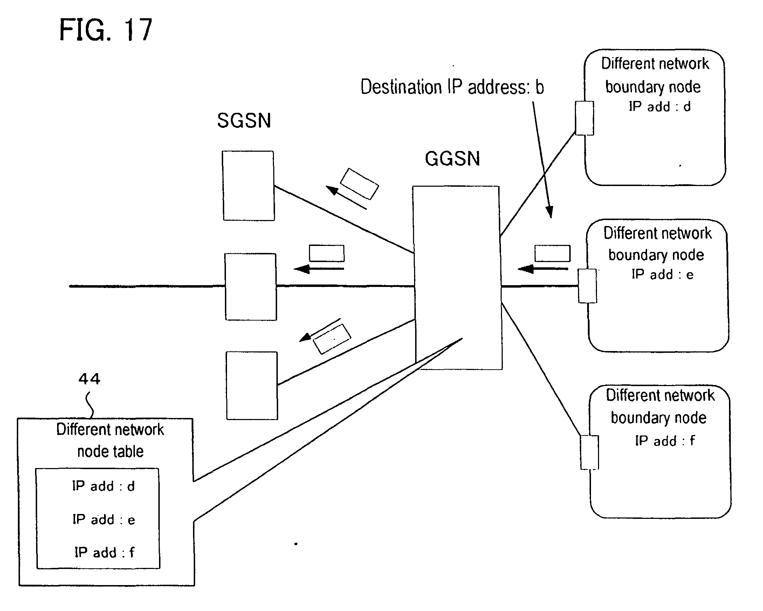

FIG. 17 shows a diagram illustrating the user data transfer processing performed in the GGSN, when a user data is received, in the reverse direction, from a different network.

On receipt of the user data from the different network, the GGSN performs transfer processing by referring to the different network node table 44 owned by the GGSN (processing procedure P17-1). In this embodiment, an exemplary transfer case in which the destination (address = b) is the network of the GGSN is shown. Namely, the GGSN determines the user data is addressed to the network of the GGSN, and produces user data copies as many as the number of the entire subordinate interfaces (processing procedure P18-1). The GGSN then transfers the user data (processing procedure P19)-.

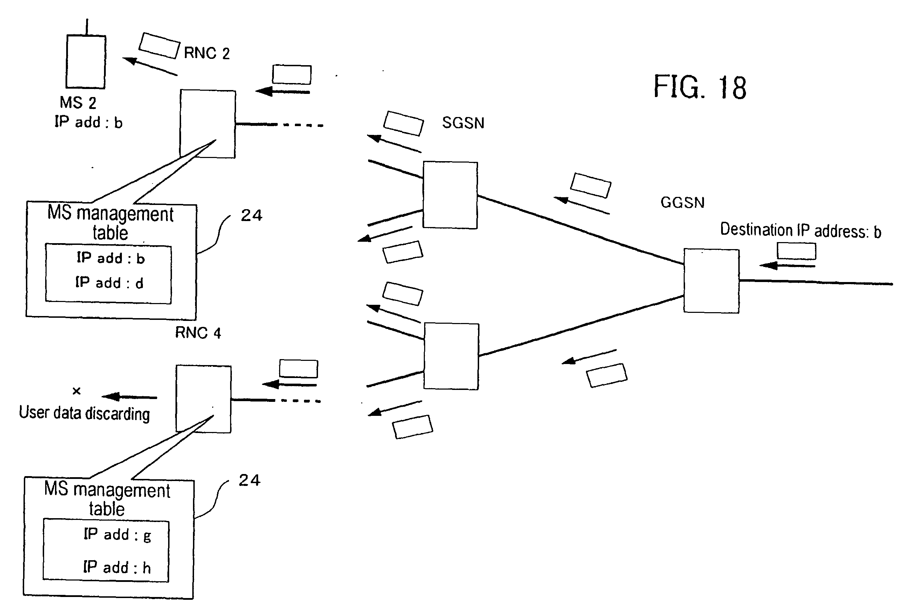

FIG. 18 shows a downlink user data transfer within the network concerned. When a node other than the boundary node GGSN receives a user data from the superordinate, the node concerned produces the user data copies as many as the number of the entire subordinate node interfaces (processing procedure P14-2), and transfers the copies to the entire subordinate interfaces (processing procedure P15).

Meanwhile, when the radio network controller RNC receives a user data from the SGSN, as a further of the present invention, the radio network controller RNC refers to MS management table 24, and thereby determines whether the user data is addressed to any destination subordinate to the radio network controller RNC concerned, as described earlier (processing procedure P11-2).

If the user data is addressed to a subordinate destination, the user data is transferred to the corresponding mobile station MS (processing procedure P13-1). Otherwise, the user data is discarded in the radio network controller RNC (processing procedure P13-3).

In the embodiment shown in FIG. 18, there is shown an example that a radio network controller RNC2 recognizes the received user data being addressed to a subordinate mobile station MS2, by referring to MS management table 24, and transfers the user data to the mobile station MS2.

Similarly, in a radio network controller RNC4, when the radio network controller RNC4 recognizes that the received user data is not addressed to the radio network controller RNC4 concerned by referring to MS management table 24, namely the user data is not addresses to any mobile station MS subordinate to the radio network controller RNC4, the user data packet concerned is discarded in packet transfer/discard function section 23.

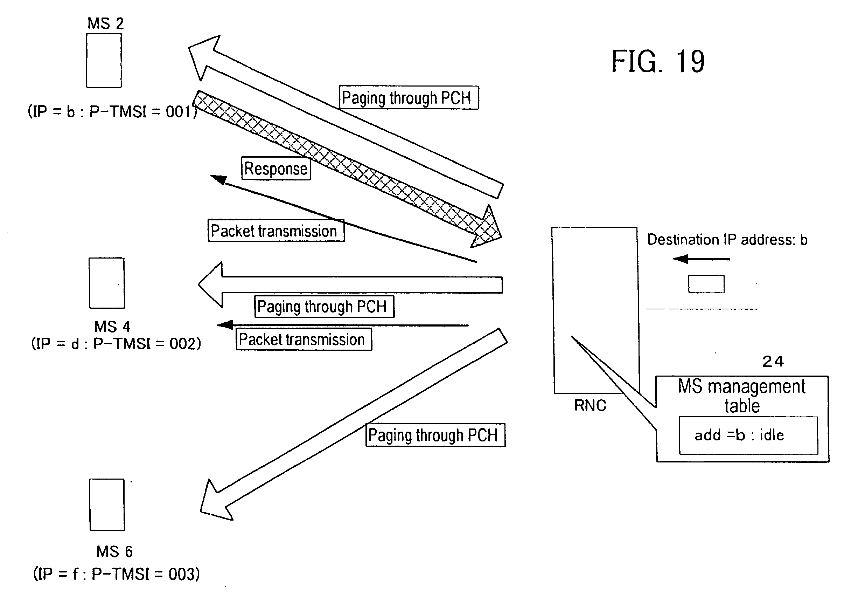

FIG. 19 shows a diagram illustrating a paging of the mobile station MS from the radio network controller RNC. When transferring the user data addressed to a subordinate mobile station MS, the radio network controller RNC refers to a condition of the mobile station MS stored in MS management table 24, and then pages the addressed mobile station MS through a paging channel from a paging function section 27, in the same way as the conventional MS status management/paging method.

The mobile station MS having been paged secures resources for the signals and sets up a bearer for user data transfer, followed by the procedures for response and data reception from the radio network controller RNC, using the method having been illustrated in FIG. 5.

The uplink/downlink control of a plurality of mobile station s MSs sharing a common channel may be performed according to the conventional control method.

In this description of the present invention, the mobile network is assumed to operate under a connectionless network environment, employing a gigabit Ethernet of the like. Therefore, at the time described above, an end-to-end user data transfer becomes possible.

In FIG. 19, as a typical example, the user data destination is assumed to be a mobile station MS2 having an IP address = b. The connection to the mobile station MS2 is possible in this example, because an idle condition is indicated for the IP address = b in the MS condition records stored in MS management table 24 of the radio network controller RNC.

In the embodiment shown in FIG. 19, a common user data transfer bearer is set up between the radio network controller RNC and the mobile station MS2. Therefore, only the mobile station MS2 receives the packet.

The radio network controller RNC pages the mobile station MS2 with P-TMSI = 001 using the paging channel. In reply to this paging, the mobile station MS2 sets up a signal bearer between the mobile station MS2 and the radio network controller RNC, through which the response is transmitted to the radio network controller RNC.

After this response, the mobile station MS2 sets up a transmission path for the user data transfer to the radio network controller RNC by use of the DTCH (Dedicated Traffic Channel). Using the bearer having been set up, the radio network controller RNC transmits the user data.

In FIG. 19, a mobile station MS4 has also set up a common data transfer bearer to the radio network controller RNC. However, because the mobile station MS2 has been paged, the mobile station MS4 does not receive the user data from the radio network controller RNC, until a next paging is performed.

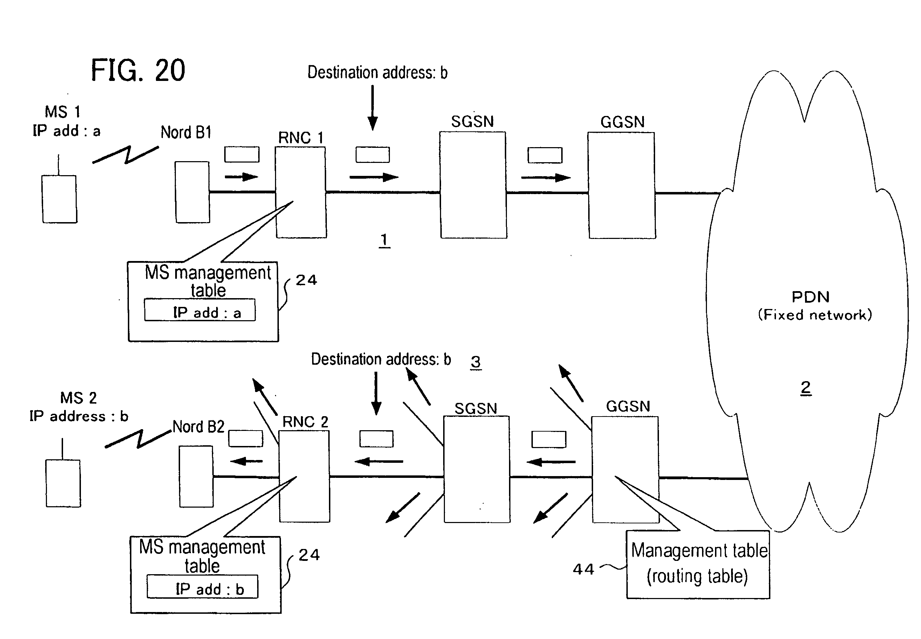

FIG. 20 shows an end-to-end user data transfer in accordance with the present invention. In this example, a user data is transferred from a mobile station MS1 in a mobile network 1 to a mobile station MS2 subordinate to a radio network controller RNC2 provided in another mobile network 2, via a fixed packet data network 2, using the method of the embodiment described earlier.

In the radio network controller RNC1, MS management table 24 is referred to, and it is determined that the destination address = b of the user data transmitted from the mobile station MS1 is not to be transferred to a terminal subordinate to the radio network controller RNC1 of interest. In such a case, the radio network controller RNC1 transfers the user data to the superordinate SGSN. A packet transfer function section 33 in the SGSN transfers the user data, without any modification, to a boundary node GGSN.

The GGSN located on the boundary against the other network refers to the different network node table 44, which is a management table. As having been described referring to FIG. 17, controller 42 in the GGSN copies the user data as many as the number of entire subordinate interfaces, and transfers the copied user data by packet transfer function section 43 provided in the GGSN. The SGSN then transfers the received user data to the subordinate radio network controllers RNCs without any modification. Each SGSN determines whether or not the received user data is addressed to its subordinate mobile station MS, by referring to MS management table 24. If the user data is addressed to any mobile station MS subordinate to the SGSN concerned, the user data is transferred thereto. Otherwise, the user data is discarded.

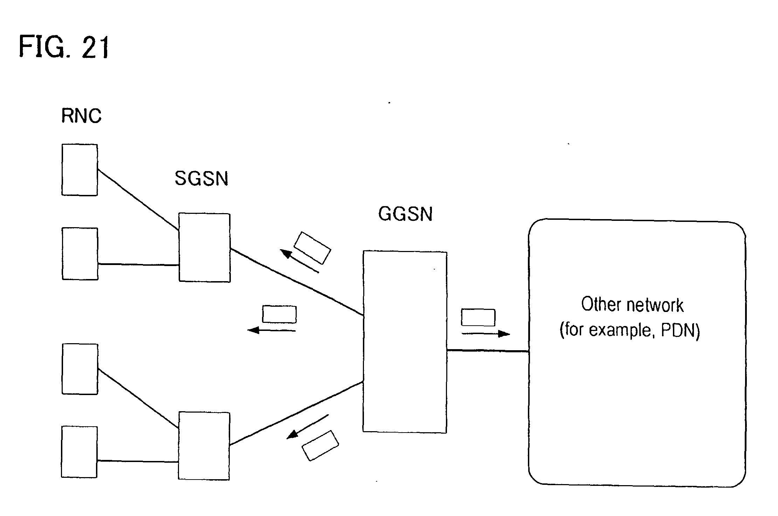

FIG. 21 shows a diagram illustrating a copy function performed in each network node. Each node has this copy function by which the received user data is copied for a plurality of interfaces, if necessary.

In the GGSN, when a user data is addressed to the network the GGSN belongs to, the user data is copied and transmitted to the entire subordinate interfaces. In the SGSN, the received downlink user data is copied and transferred to the entire radio network controllers RNCs subordinate to the SGSN. Further, in the radio network controller RNC, only the user data having an address stored in MS management table 24 is transferred to the corresponding mobile station MS by packet transfer/discard function section 23, and the other user data is discarded.

In the present invention having been described above, it is also possible, as an option, to provide a protocol stack 26-1 (refer to FIG. 11) to be added to the radio network controller RNC in the intermediate node B, instead of the radio network controller RNC. Further, the node B is constituted to have a management table 41 of the mobile station MS. With such a configuration, it becomes possible that the node B itself performs the mobile station management function.

Moreover, as an option, it is also possible to apply a structure in which mobile station s MSs other than the paged mobile station MS do not receive the user data through the common traffic channel, so as to reduce the power consumed in a plurality of mobile station s MSs sharing the common traffic channel.

Additionally, in the embodiments described above, the mobile station MS may not always be a movable terminal. It may be a terminal physically located in a fixed position. In such a case, the present invention may also be applicable by considering the mobile station described above as a mobile station which is not moving.

### INDUSTRIAL APPLICABILITY

with the configuration according to the present invention, routing table management becomes unnecessary in network nodes, except for the nodes on the end side, which manage IP addresses of the mobile station s MSs, and a boundary node located on the boundary to a different network. Accordingly, it becomes possible to eliminate occurrence of traffic notifying modification of location information, caused by the movement of the mobile station MS.

Also, the mobile station MS can transmit/receive user data instantly at the location to which the mobile station MS has moved. Thus, it becomes possible to solve the problem of the core network side, and also the problem of both the core network and the radio access network (RAN) side.

Further, when a terminal transmits/receives signals between the terminal and the radio network controller RNC, the terminal inserts a parameter for requesting 'use of the common traffic channel' into a signal (RRC Connection Request) in the procedure for securing resources. With this function, the entire mobile station s MSs subordinate to one radio network controller (RNC) become able to use the common traffic channel.

Further, as a total system, by assigning a lot of resources to the common traffic channel, it becomes possible to solve a problem on the RAN side including the quality of delay caused by individual channel setting before data transfer, and efficient bandwidth utilization.

The foregoing description of the embodiments is not intended to limit the invention to the particular details of the examples illustrated. Any suitable modification and equivalents may be resorted to the scope of the invention. All features and advantages of the invention which fall within the scope of the invention are covered by the appended claims.

## Claims

1. A mobile communication system performing both radio communication to a mobile station and packet communication within the system, said mobile communication system comprising:
a plurality of nodes of a tree-shaped connection structure, having a boundary node to a different network positioned at the top,
wherein management information of the mobile station is retained in an end-side node among the plurality of nodes.

2. The mobile communication system according to claim 1,
wherein, each plurality of nodes transfers a user data either received from a node located in the network concerned, or received from the different network and addressed to the network of interest, by use of the broadcast format to the end-side nodes, in which the user data is further transmitted to a mobile station subordinate to and managed by the end-side node, based on the management information.

3. The mobile communication system according to claim 1,
wherein a parameter requesting to use a common traffic channel is contained in a connection request signal transmitted from the mobile station to the end-side node, and by use of the parameter, the end-side node secures a transmission path for transferring the user data on the common channel provided between the mobile station and the end-side node.

4. The mobile communication system according to claim 3,
wherein an IP address assigned to the mobile station is further contained in the connection request signal, and the end-side node generates a management table having the IP address correspondingly to a number for identifying the mobile station, and the mobile station is managed on an IP address basis according to the management table.

5. The mobile communication system according to claim 1,
wherein the end-side node comprises at least a function of managing the terminal location, a function of managing a communication path, and environment setting information necessary for establishing packet communication between the mobile station and the end-side- node, and a message transmitted from the mobile station for generating the environment setting information is terminated in the end-side node.

6. The mobile communication system according to claim 1,
wherein the end-side node is either a radio base station or a radio network controller.

7. A packet transmission method in the mobile communication system according to claim 1, comprising:
a first processing procedure registering the location of the mobile station into the end-side node by setting up a signal transmission path between the end-side node and the mobile station;
a second processing procedure setting a mobile communication environment; and
a third processing procedure setting up a user data transmission path.

8. A mobile communication system transmitting information either addressed to or originated from a mobile station on a packet communication basis between hierarchically disposed nodes,
wherein a node disposed on the superordinate side in the hierarchy comprises a means for transmitting a packet in the broadcast format to the nodes disposed on the subordinate side, and
a node disposed on the subordinate side in the hierarchy comprises a means for transmitting a packet to a predetermined node superordinate to the node of interest, according to the information received from the mobile station.

9. A node included in a mobile communication system transmitting information either addressed to or originated from a mobile station on a packet communication basis between hierarchically disposed nodes, said node comprising:
a transmission means for transmitting a packet in the broadcast format to the nodes disposed on the subordinate side in the hierarchy; and
a reception means for receiving a packet transmitted from a predetermined subordinate node.

10. The node according to claim 9,
wherein the transmission means broadcasts a packet not addressed to a different system, and
when a received packet is addressed to the different system, the reception means transmits said packet either to the different system, or to the corresponding further superordinate node in the hierarchy.

11. A node included in a mobile communication system transmitting information either addressed to or originated from a mobile station on a packet communication basis between hierarchically disposed nodes, said node comprising:
a means for transmitting a packet to a predetermined superordinate node according to the information received from the mobile station;
a means for managing the location information of the mobile station; and
a transmission means for transmitting a received packet having been transmitted in the broadcast format from the superordinate node in the hierarchy, to either a mobile station or a subordinate node further, when the packet is addressed to the mobile station of which location information is managed by the location information management means.
